# EUROPEAN PATENT APPLICATION

(11) **EP 4 765 735 A1**
(43) Date of publication of application: **24.06.2026**
(21) Application number: 24867207.3
(22) Date of filing: 20.08.2024
(51) Int. Cl.: H04L 9/40, H04L 9/32, H04L 51/42

(54) **ELECTRONIC SEAL SYSTEM FOR ACCESSING DIGITAL MAILBOX, AND METHOD FOR ACCESSING DIGITAL MAILBOX**

(30) Priority: 22.09.2023 CN 202311239462
(71) Applicant: Hu, Jinqian, Hangzhou, Zhejiang 310012 (CN)
(72) Inventor: GUO, Ai, Hangzhou, Zhejiang 310012 (CN); CAI, Xinyi, Hangzhou, Zhejiang 310012 (CN); HU, Jinqian, Hangzhou, Zhejiang 310012 (CN)
(74) Representative: Chung, Hoi Kan
(86) International application number: PCT/CN2024/113254
(87) International publication number: WO 2025/060792

(57) **Abstract**

The invention discloses an electronic seal system accessing a digital mailbox, including: a first acquisition module acquiring multiple identity information and enterprise information of a user; a second acquisition module acquiring multiple CA certificates and corresponding keys provided by multiple certificate authorities; an information authentication module performing physical or digital authentication on the identity and enterprise information based on the CA certificates, and generating authenticated identity and enterprise information; an electronic private/official seal generation module generating an electronic private seal and an electronic official seal of the user based on the authenticated information; application modules for enabling application functions; and a digital mailbox linking module linking the seal generation module and the application modules after the user logs into a digital mailbox.

## Description

### TECHNICAL FIELD

The invention relates to the field of information security technology and specifically relates to an electronic seal system.

### BACKGROUND

Existing electronic seal systems can only be used within their respective platforms and cannot link with other platforms, nor can they access mailboxes, which often leads to restrictions on the application functions and application scenarios where electronic seals can be used.

Therefore, those skilled in the art urgently need to develop an electronic seal system capable of linking with other platforms and accessing digital mailboxes, and a method for accessing digital mailboxes, to create an integrated platform from certification, credit enhancement, credit investigation to trustworthiness, allowing users to manage electronic seals within the digital mailbox, use electronic seals to sign electronic documents, and also view electronic document signing information.

It should be noted that the above introduction to the technical background is only set forth for the convenience of a clear and complete description of the technical solution of the present invention and to facilitate understanding by those skilled in the art. The above technical solutions should not be considered as known to those skilled in the art merely because these solutions are set forth in the Background Art section of the present invention.

### SUMMARY

In order to overcome the defects in the prior art, an embodiment of the present invention provides an electronic seal system accessing a digital mailbox and a method for accessing a digital mailbox.

An embodiment of the present application discloses an electronic seal system accessing a digital mailbox, including: a first acquisition module configured to acquire multiple identity information and multiple enterprise information of a user; a second acquisition module configured to acquire multiple CA certificates and corresponding multiple keys provided by multiple certificate authorities; an information authentication module configured to perform physical or digital authentication on the multiple identity information and the multiple enterprise information of the user according to the multiple CA certificates, and generate multiple authenticated identity information and multiple authenticated enterprise information; an electronic private/official seal generation module configured to generate an electronic private seal and an electronic official seal of the user according to the multiple authenticated identity information and the multiple authenticated enterprise information of the user; multiple application modules configured to enable multiple application functions; and a digital mailbox linking module linking the electronic private/official seal generation module and the multiple application modules after the user logs into a digital mailbox.

Further, the multiple application functions include electronic contract management, online handling of government affairs business, personal and enterprise archive management, secure identity verification and two-factor authentication, digital signature and encrypted communication, and digital identity management.

Further, the digital mailbox is bound by a fixed telephone number, and the fixed telephone number is a digital application conforming to a global financial security standard.

Further, a space of the digital mailbox is formatted and digitized.

Further, the electronic seal system accessing a digital mailbox further includes a multi-module. The multi-module includes: a central control module; and a communication module, an identity authentication module, a key module, and a storage module connected to the central control module. The communication module is configured to implement communication between the electronic seal system for accessing a digital mailbox and an external server; the identity authentication module is configured to authenticate biometric identification data input by the user to generate authenticated biometric identification data, and to authorize the user after the authentication is passed; the key module is configured to store multiple keys, and to encrypt the multiple authenticated identity information and the multiple authenticated enterprise information according to corresponding keys in the multiple keys to generate multiple encrypted authenticated identity information and multiple encrypted authenticated enterprise information; the storage module is configured to store the authenticated biometric identification data, the multiple encrypted authenticated identity information, the multiple encrypted authenticated enterprise information, the electronic private seal, and the electronic official seal; and the central control module is configured to receive input and control operations of other modules, and to allow the user to invoke the electronic private seal and the electronic official seal after the user obtains authorization.

An embodiment of the present application further discloses a method of accessing a digital mailbox, the method including the following steps: providing an electronic seal system, wherein the electronic seal system includes a first acquisition module, a second acquisition module, an information authentication module, an electronic private/official seal generation module, multiple application modules, and a digital mailbox linking module; utilizing the first acquisition module to acquire multiple identity information and multiple enterprise information of a user; utilizing the second acquisition module to acquire multiple CA certificates and corresponding multiple keys provided by multiple certificate authorities; utilizing the information authentication module to perform physical or digital authentication on the multiple identity information and the multiple enterprise information of the user according to the multiple CA certificates, and generate multiple authenticated identity information and multiple authenticated enterprise information; utilizing the electronic private/official seal generation module to generate an electronic private seal and an electronic official seal of the user according to the multiple authenticated identity information and the multiple authenticated enterprise information of the user; utilizing the multiple application modules to enable multiple application functions; and utilizing the digital mailbox linking module to link the electronic private/official seal generation module and the multiple application modules after the user logs into a digital mailbox.

By means of the above technical solution, the beneficial effects of the present invention are as follows: Compared with the prior art, the advantages of the electronic seal system accessing a digital mailbox and the method for accessing a digital mailbox provided by the present invention include: (1) It is able to access the electronic seal into the digital mailbox; the electronic seal system provides service interfaces related to electronic seal management and PDF signature verification, and the digital mailbox provides related application functions based on the interfaces of the electronic seal system and other usage requirements; (2) It allows the user to manage the electronic seal, use the electronic seal to sign electronic documents, and also view electronic document signing information within the digital mailbox; (3) Through the Jizhengtong credit investigation seal, unified management by one seal and unified handling by one seal can be realized. In addition, the electronic seal system accessing a digital mailbox and the method for accessing a digital mailbox of the present invention can link with other platforms and can access the digital mailbox to create an integrated platform from certification, credit enhancement, credit investigation to trustworthiness.

### BRIEF DESCRIPTION OF DRAWINGS

FIG. 1 is a block diagram of an electronic seal system accessing a digital mailbox in an embodiment of the present invention.
FIG. 2 is a block diagram of the multi-module in FIG. 1.
FIG. 3 is a flow chart of a method for accessing a digital mailbox in a first embodiment of the present invention.
FIG. 4 is a flow chart of a method for accessing a digital mailbox in a second embodiment of the present invention.

### Reference Numerals in the above drawings:

10 Electronic Seal System Accessing Digital Mailbox
110 First Acquisition Module
120 Second Acquisition Module
130 Information Authentication Module
140 Electronic Private Seal/Official Seal Generation Module
150A-150N Application Modules
160 Digital Mailbox Linking Module
200 Multi-module
210 Central Control Module
220 Communication Module
230 Identity Authentication Module
240 Key Module
250 Storage Module
ID1-IDn Identity Information
aID1-aIDn Authenticated Identity Information
eaID1-eaIDn Encrypted Authenticated Identity Information
CI1-CIm Enterprise Information
aCI1-aCIm Authenticated Enterprise Information
eaCI1-eaCIm Encrypted Authenticated Enterprise Information
CAC1-CACp CA Certificate
KEY1-KEYq Key
EPS Electronic Private Seal
ECS Electronic Official Seal
BID Biometric Identification Data
aBID Authenticated Biometric Identification Data
S310-S370, S410-S460 Steps

### DETAILED DESCRIPTION OF THE EMBODIMENTS

In order to make the above and other objects, features, and advantages of the present invention more apparent and easier to understand, preferred embodiments are listed below and described in detail in conjunction with the accompanying drawings.

In order to more clearly describe the technical solutions in the embodiments of the present invention or in the prior art, the drawings required for the description of the embodiments or the prior art will be briefly introduced below. Obviously, the drawings in the following description are only some embodiments of the present invention. For those of ordinary skill in the art, other drawings can also be obtained based on these drawings without creative efforts.

The technical solutions in the embodiments of the present invention will be clearly and completely described below with reference to the accompanying drawings in the embodiments of the present invention. Obviously, the described embodiments are only a part of the embodiments of the present invention, rather than all of the embodiments. Based on the embodiments in the present invention, all other embodiments obtained by those of ordinary skill in the art without creative efforts shall fall within the protection scope of the present invention.

It should be noted that in the description of the present invention, terms such as "first" and "second" are only used for descriptive purposes and to distinguish similar objects, and there is no sequence between the two, nor can they be understood as indicating or implying relative importance. In addition, in the description of the present invention, unless otherwise specified, the meaning of "multiple" is two or more.

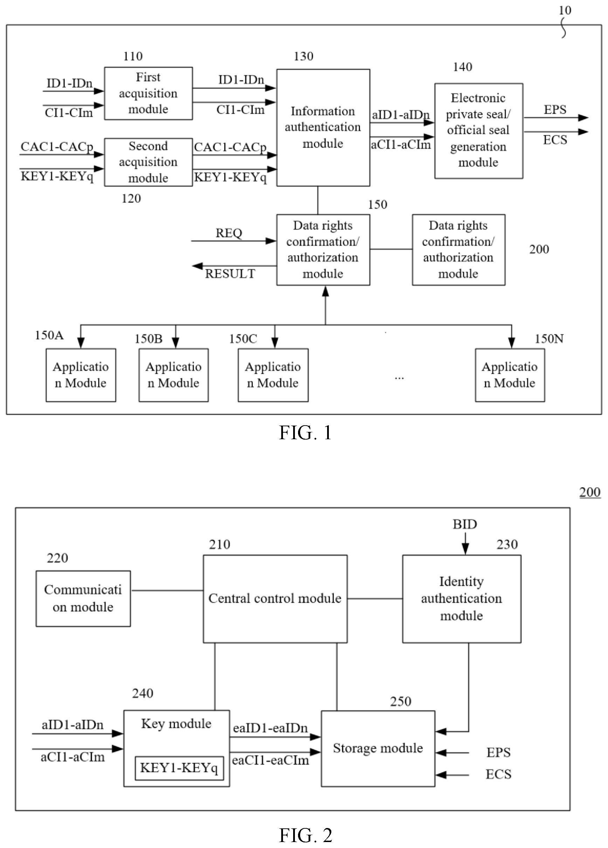

Please refer to FIG. 1. FIG. 1 is a block diagram of an electronic seal system 10 accessing a digital mailbox in an embodiment of the present invention. As shown in FIG. 1, the electronic seal system 10 accessing a digital mailbox includes a first acquisition module 110, a second acquisition module 120, an information authentication module 130, an electronic private seal/official seal generation module 140, multiple application modules 150A-150N, a digital mailbox linking module 160, and a multi-module 200. The first acquisition module 110 is configured to acquire multiple identity information ID1-IDn and multiple enterprise information CI1-CIm of a user. The second acquisition module 120 is configured to acquire multiple CA certificates CAC1-CACp and corresponding multiple keys KEY1-KEYq provided by multiple Certificate Authorities. The information authentication module 130 is coupled to the first acquisition module 110 and the second acquisition module 120, and is configured to perform physical or digital authentication on the multiple identity information ID1-IDn and the multiple enterprise information CI1-CIm of the user according to the multiple CA certificates CAC1-CACp, and generate multiple authenticated identity information aID1-aIDn and multiple authenticated enterprise information aCI1-aCIm. The electronic private seal/official seal generation module 140 is coupled to the information authentication module 130, and is configured to generate an electronic private seal EPS and an electronic official seal ECS of the user according to the multiple authenticated identity information aID1-aIDn and the multiple authenticated enterprise information aCI1-aCIm of the user. The multiple application modules 150A-150N are configured to enable multiple application functions. The digital mailbox linking module 160 is coupled to the electronic private seal/official seal generation module 140 and the multiple application modules 150A-150N, and is configured to link the electronic private seal/official seal generation module 140 and the multiple application modules 150A-150N after the user logs into a digital mailbox.

Please note that the multiple identity information ID1-IDn may include the ID card, address, email number, phone number, and/or video account of the company opener of the user, and the multiple enterprise information CI1-CIm may include the bound bank account number, electronic business license, tax control information, official seal number, legal person certificate number, phone number, social credit code, and/or electronic license number of the enterprise user authorized by the banking system and/or government system, but this is only for exemplary illustration, and the present invention is not limited thereto.

The above multiple application functions include electronic contract management, online handling of government affairs business, personal and enterprise archive management, secure identity verification and two-factor authentication, digital signature and encrypted communication, digital identity management, etc., but this is only for exemplary illustration, and the present invention is not limited thereto.

For example, after logging into the digital mailbox, the user can link the electronic private seal/official seal generation module 140 and the application module corresponding to the electronic contract management application function among the multiple application modules 150A-150N through the digital mailbox linking module 160. The following is the application process for performing electronic contract management:
Step 1: Login to the digital mailbox account. The user logs into the electronic seal system 10 accessing a digital mailbox by logging into the account of the digital mailbox; and on the account homepage or dashboard, the user can find "Electronic Contract" or a similar option.
Step 2: Create a new contract. The user selects the "Create New Contract" option; then, the user fills in contract-related information, such as the contract title, participant information, contract terms, etc.
Step 3: Edit contract content. In the contract editing interface, the user can input the specific content, terms, and conditions of the contract; the user can also upload attachments, add signature areas, and specify positions that need to be signed.
Step 4: Add signatories. The user specifies each party that needs to sign in the contract. For each signatory, the user can choose to use a digital signature, a credit investigation seal, or other authentication methods.
Step 5: Send contract notification. The user completes the editing of the contract content and then clicks the "Send" button. The electronic seal system 10 accessing a digital mailbox will automatically send contract notifications to each signatory, notifying each signatory that there is an electronic contract to be signed.
Step 6: Sign the contract. After receiving the electronic contract notification, each signatory logs into their digital mailbox account; in the contract list, each signatory can find the electronic contract to be signed and click to enter the contract details.
Step 7: Digital signature and credit investigation seal. The signatory can choose to use a digital signature or a credit investigation seal for signing; if a digital signature is used, the electronic seal system 10 accessing a digital mailbox will require the signatory to use their private key to create the digital signature.
Step 8: Confirm signing. After the signatory completes the signing, the electronic seal system 10 accessing a digital mailbox will verify the validity of the signature or seal; the electronic seal system 10 accessing a digital mailbox confirms the signatures of all signatories and marks the contract as "Signed".
Step 9: Contract management. After the contract signing is completed, the user can view the status of all contracts in the contract management interface of the digital mailbox account. The user can also view the contract content, signing records, and related attachments at any time.

Through this application process, electronic contract management becomes convenient, secure, and environmentally friendly in the electronic seal system 10 accessing a digital mailbox. Users can create, send, and sign contracts through the platform, realizing a fast and digital contract process while reducing the use of paper documents. This is very useful for business transactions, legal agreements, and other contract management, and also improves efficiency and accuracy.

As another example, after logging into the digital mailbox, the user can link the electronic private seal/official seal generation module 140 and the application module corresponding to the personal and enterprise archive management application function among the multiple application modules 150A-150N through the digital mailbox linking module 160. The following is the application process for performing personal and enterprise archive management:
Step 1: Login to the digital mailbox account. The user logs into the electronic seal system 10 accessing a digital mailbox by logging into the account of the digital mailbox; and on the account homepage or dashboard, the user can find "Archive Management" or a similar option.
Step 2: Create a new archive. The user selects the "Create New Archive" option; the user can also name the archive and choose whether it is a personal archive or an enterprise archive.
Step 3: Upload files and certificates. The user enters the archive management interface and can choose to upload important information such as documents, certificates, and photos; the user can also classify and organize the files, such as ID cards, passports, academic certificates, etc.
Step 4: Add descriptions and tags. The user can add descriptions and tags to each uploaded file for easier lookup and identification; for example, the user can add tags such as "University Graduation Certificate" or "Master's Degree Certificate" to an academic certificate.
Step 5: Set permissions and sharing. The user can choose to share specific archives or files with other users or external contacts; the user can also set permissions, such as read-only, edit, etc., to control the access level of the shared content.
Step 6: Search and access. The user can use the search function in the archive management interface to find specific files or archives; the user can also access their archives at any time to view, download, or share files therein.
Step 7: Update and maintain. The user can upload new files, update descriptions, adjust permissions, etc., at any time. If there are new certificates or important files, the user can add them to the appropriate archive at any time.

Through this application process, individuals and enterprises can use the electronic seal system 10 accessing a digital mailbox to conveniently manage and retain important documents and certificates. Such an archive management system helps organize information, access required files at any time, and provides a secure and convenient way to store and manage critical data. Whether it is an individual user or an enterprise, they can all benefit from this digital archive management.

As another example, after logging into the digital mailbox, the user can link the electronic private seal/official seal generation module 140 and the application module corresponding to the digital identity management application function among the multiple application modules 150A-150N through the digital mailbox linking module 160. The following is the application process for performing digital identity management:
Step 1: Login to the digital mailbox account. The user logs into the electronic seal system 10 accessing a digital mailbox by logging into the account of the digital mailbox; on the account homepage or dashboard, the user can find "Digital Identity Management" or a similar option.
Step 2: View and edit personal profile. After entering the digital identity management interface, the user can view and edit their personal profile; the user can also upload photos and fill in contact information, educational background, work experience, etc.
Step 3: Authenticate and verify information. The user can choose to authenticate and verify their identity information; for example, the user can upload ID card photos and perform real-name authentication to enhance the security and credibility of the account.
Step 4: Add other certificates and information. The user can add other certificates and information, such as a driver's license, passport, social security number, etc.; this information can be used for specific businesses, such as identity verification when applying for certain services online.
Step 5: Set privacy settings. The user can set who can view and access their digital identity information; the user can also choose different privacy settings such as public, contacts only, or self only.
Step 6: Authorization management. The user can view the information they have already authorized to other applications or platforms; the user can also cancel authorization at any time to protect their digital identity information from being misused.
Step 7: Use digital identity information. When the user needs to perform identity verification on other platforms or applications, they can choose to use the digital identity information in the digital mailbox; the user can also authorize the sharing of specific information without entering this information again.
Step 8: Update and maintain. The user can update and maintain their digital identity information at any time; if there are important changes, the user can also perform updates in the digital identity management interface.

Through this application process, the digital identity management function of the electronic seal system 10 accessing a digital mailbox enables users to better manage their own identity information. This includes personal profiles, certificates, authentication information, and authorization, helping users more conveniently perform identity verification and information sharing in various scenarios. At the same time, users can better protect their privacy and control who can access their identity information.

It is worth noting that when the user logs into the account of the digital mailbox, the electronic seal system 10 accessing a digital mailbox is logged into simultaneously, and the digital mailbox linking module 160 of this electronic seal system 10 will link the electronic private seal/official seal generation module 140 and the multiple application modules 150A-150N, and the multiple application modules 150A-150N will enable multiple application functions, such as electronic contract management, online handling of government affairs business, personal and enterprise archive management, secure identity verification and two-factor authentication, digital signature and encrypted communication, digital identity management, etc. The digital mailbox linking module 160 will further link with readers, electronic contract version repositories, translation platforms, etc.

Please note that the digital mailbox is bound by a fixed telephone number, and the fixed telephone number is a digital application conforming to a global financial security standard. Whether it is an individual, enterprise, family, or government, the fixed telephone number is used as the prefix number of the digital mailbox, so the digital mailbox can be used globally because every fixed telephone number is globally unique.

In addition, the space of the digital mailbox is formatted and digitized, for example: the account of the digital mailbox is 0108800001@dzzd.com, 010 88000001-01 is a contract number, 010 88000001-02 is a bill number, 010 88000001-03 is a payment number, 010 88000001-04 is a video, and 010 88000001-05 is a photo, but the above is only for exemplary illustration, and the present invention is not limited thereto.

Please refer to FIG. 1 and FIG. 2 together. The electronic seal system 10 accessing a digital mailbox in FIG. 1 further includes a multi-module 200. As shown in FIG. 2, the multi-module 200 includes a central control module 210, and a communication module 220, an identity authentication module 230, a key module 240, and a storage module 250 connected to the central control module 210. The communication module 220 is configured to implement communication between the electronic seal system 10 accessing a digital mailbox and an external server. The identity authentication module 230 is configured to authenticate the biometric identification data BID input by the user to generate authenticated biometric identification data aBID, and authorize the user after the authentication is passed. The key module 240 is configured to store multiple keys KEY1-KEYq, and encrypt the multiple authenticated identity information aID1-aIDn and the multiple authenticated enterprise information aCI1-aCIm according to corresponding keys in the multiple keys KEY1-KEYq to generate multiple encrypted authenticated identity information eaID1-eaIDn and multiple encrypted authenticated enterprise information eaCI1-eaCIm. The storage module 250 is configured to store the authenticated biometric identification data aBID, the multiple encrypted authenticated identity information eaID1-eaIDn, the multiple encrypted authenticated enterprise information eaCI1-eaCIm, the electronic private seal EPS, and the electronic official seal ECS. The central control module 210 is configured to receive input and control operations of other modules 220-250, and allow the user to invoke the electronic private seal EPS and the electronic official seal ECS after the user obtains authorization.

Further, the communication module 220 may include at least one of a 3G communication module, a 4G communication module, a 5G communication module, a WIFI module, an NB-IoT module, a Bluetooth module, an NFC module, and an infrared module; the communication module 220 supports IPV4 and IPV6 protocols.

Please note that the above biometric identification data may include fingerprint information data, palm print information data, iris information data, and/or facial feature recognition data, or any biometric feature data that can identify the user. In actual applications, one or a combination of multiple of them can be adopted for security identification.

From the above, it can be seen that the electronic seal system 10 accessing a digital mailbox of the present invention accesses the electronic seal into the digital mailbox; the electronic seal system 10 provides service interfaces related to electronic seal management and PDF signature verification, and the digital mailbox provides related application functions based on the interfaces of the electronic seal system 10 and other usage requirements, allowing the user to manage the electronic seal, use the electronic seal to sign electronic documents, and also view electronic document signing information within the digital mailbox.

The electronic seal system 10 accessing a digital mailbox includes the Jizhengtong electronic seal (intensification of various certificates and keys, for example: business license, tax control, banking, etc.).

For example, if a domestic enterprise wants to apply for a national-level high-tech enterprise, the current process requires filling in dozens of forms involving data information from multiple departments. If the Jizhengtong credit investigation seal is used, in the selection item, the column for applying for a national-level high-tech enterprise is selected, and the electronic seal automatically matches and intensively corresponds to the certificates of relevant departments to obtain corresponding data information provided by government departments through authorization. Therefore, through the Jizhengtong credit investigation seal, unified management by one seal and unified handling by one seal can be realized.

The electronic seal system accessing a digital mailbox of the present invention can be a trusted authentication server system or a third-party authentication platform system. This terminal device includes the authentication, storage, management, and application of various certificates and keys such as electronic seals, corresponding to any department or platform system of socioeconomic transactions, including governments, enterprises, and individual families.

The electronic seal system accessing a digital mailbox of the present invention can be implemented by a physical-electronic integrated smart electronic seal chip. The physical-electronic integrated smart electronic seal chip stores various certificates and keys, and all certificates and keys can be remotely distributed, downloaded, stored, and applied.

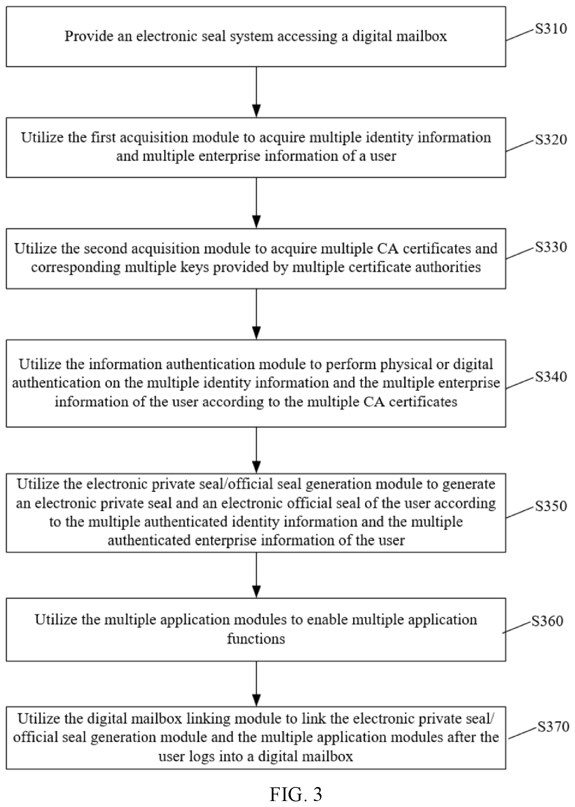

Please refer to FIG. 1 and FIG. 3 together. FIG. 3 is a flow chart of a method for accessing a digital mailbox in a first embodiment of the present invention. The method for accessing a digital mailbox in FIG. 3 includes the following steps:
Step S310: Provide an electronic seal system accessing a digital mailbox, wherein the electronic seal system includes a first acquisition module, a second acquisition module, an information authentication module, an electronic private seal/official seal generation module, multiple application modules, and a digital mailbox linking module;
Step S320: Utilize the first acquisition module to acquire multiple identity information and multiple enterprise information of a user;
Step S330: Utilize the second acquisition module to acquire multiple CA certificates and corresponding multiple keys provided by multiple certificate authorities;
Step S340: Utilize the information authentication module to perform physical or digital authentication on the multiple identity information and the multiple enterprise information of the user according to the multiple CA certificates, and generate multiple authenticated identity information and multiple authenticated enterprise information;
Step S350: Utilize the electronic private seal/official seal generation module to generate an electronic private seal and an electronic official seal of the user according to the multiple authenticated identity information and the multiple authenticated enterprise information of the user;
Step S360: Utilize the multiple application modules to enable multiple application functions;
Step S370: Utilize the digital mailbox linking module to link the electronic private seal/official seal generation module and the multiple application modules after the user logs into a digital mailbox.

Please note that Step S320 is executed by the first acquisition module 110, Step S330 is executed by the second acquisition module 120, Step S340 is executed by the information authentication module 130, Step S350 is executed by the electronic private seal/official seal generation module 140, Step S360 is executed by the application modules 150A-150N, and Step S370 is executed by the digital mailbox linking module 160.

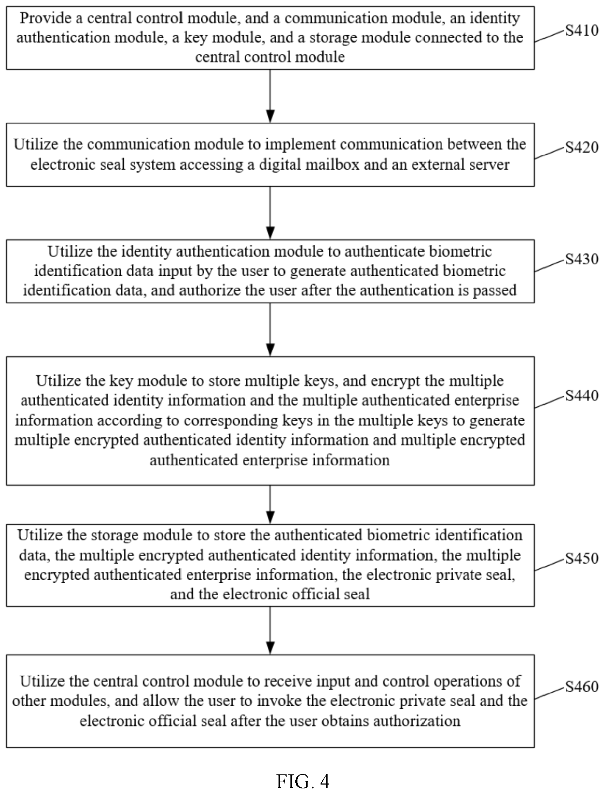

Please refer to FIG. 2 and FIG. 4 together. FIG. 4 is a flow chart of a method for accessing a digital mailbox in a second embodiment of the present invention. The method for accessing a digital mailbox in FIG. 4 includes the following steps:
Step S410: Provide a central control module, and a communication module, an identity authentication module, a key module, and a storage module connected to the central control module.
Step S420: Utilize the communication module to implement communication between the electronic seal system accessing a digital mailbox and an external server;
Step S430: Utilize the identity authentication module to authenticate biometric identification data input by the user to generate authenticated biometric identification data, and authorize the user after the authentication is passed;
Step S440: Utilize the key module to store multiple keys, and encrypt the multiple authenticated identity information and the multiple authenticated enterprise information according to corresponding keys in the multiple keys to generate multiple encrypted authenticated identity information and multiple encrypted authenticated enterprise information;
Step S450: Utilize the storage module to store the authenticated biometric identification data, the multiple encrypted authenticated identity information, the multiple encrypted authenticated enterprise information, the electronic private seal, and the electronic official seal;
Step S460: Utilize the central control module to receive input and control operations of other modules, and allow the user to invoke the electronic private seal and the electronic official seal after the user obtains authorization.

Please note that Step S420 is executed by the communication module 220, Step S430 is executed by the identity authentication module 230, Step S440 is executed by the key module 240, Step S450 is executed by the storage module 250, and Step S460 is executed by the central control module 210.

Specific embodiments of the present invention provide an electronic seal system accessing a digital mailbox and a method for accessing a digital mailbox, which can access the electronic seal into the digital mailbox; the electronic seal system 10 provides service interfaces related to electronic seal management and PDF signature verification, and the digital mailbox provides related application functions based on the interfaces of the electronic seal system 10 and other usage requirements, allowing the user to manage the electronic seal, use the electronic seal to sign electronic documents, and also view electronic document signing information within the digital mailbox. The electronic seal system 10 accessing a digital mailbox includes the Jizhengtong electronic seal (intensification of various certificates and keys, such as: business license, tax control, banking, etc.).

The above embodiments of the present invention can be implemented in various hardware, software codes, or a combination of both. For example, the embodiment of the present invention can also be a program code for executing the above method in a Digital Signal Processor (DSP). The present invention can also involve multiple functions executed by a computer processor, a digital signal processor, a microprocessor, or a Field Programmable Gate Array (FPGA). The above processor can be configured to execute specific tasks according to the present invention, which is completed by executing machine-readable software codes or firmware codes defining the specific methods disclosed in the present invention. The software codes or firmware codes can be developed into different programming languages and different formats or forms. The software codes can also be compiled for different target platforms. However, different code styles, types, and languages of the software codes performing tasks according to the present invention and other types of configuration codes do not depart from the spirit and scope of the present invention.

By means of the above technical solution, the beneficial effects of the present invention are as follows: Compared with the prior art, the advantages of the electronic seal system accessing a digital mailbox and the method for accessing a digital mailbox provided by the present invention include: (1) It is able to access the electronic seal into the digital mailbox; the electronic seal system provides service interfaces related to electronic seal management and PDF signature verification, and the digital mailbox provides related application functions based on the interfaces of the electronic seal system and other usage requirements; (2) It allows the user to manage the electronic seal, use the electronic seal to sign electronic documents, and also view electronic document signing information within the digital mailbox; (3) Through the Jizhengtong credit investigation seal, unified management by one seal and unified handling by one seal can be realized. In addition, the electronic seal system accessing a digital mailbox and the method for accessing a digital mailbox of the present invention can link with other platforms and can access the digital mailbox to create an integrated platform from certification, credit enhancement, credit investigation to trustworthiness.

The present invention applies specific embodiments to explain the principles and implementation modes of the present invention. The description of the above embodiments is only used to help understand the method and its core idea of the present invention; at the same time, for those of ordinary skill in the art, according to the idea of the present invention, there will be changes in the specific implementation modes and application scope. In summary, the content of this specification should not be understood as a limitation on the present invention.

## Claims

1. An electronic seal system for accessing a digital mailbox, comprising:
a first acquisition module configured to acquire a plurality of identity information and a plurality of enterprise information of a user;
a second acquisition module configured to acquire a plurality of CA certificates and corresponding plurality of keys provided by a plurality of certificate authorities;
an information authentication module coupled to the first acquisition module and the second acquisition module, configured to perform physical or digital authentication on the plurality of identity information and the plurality of enterprise information of the user according to the plurality of CA certificates, and generate a plurality of authenticated identity information and a plurality of authenticated enterprise information;
an electronic private seal/official seal generation module coupled to the information authentication module, configured to generate an electronic private seal and an electronic official seal of the user according to the plurality of authenticated identity information and the plurality of authenticated enterprise information of the user;
a plurality of application modules configured to enable a plurality of application functions; and
a digital mailbox linking module coupled to the electronic private seal/official seal generation module and the plurality of application modules, configured to link the electronic private seal/official seal generation module and the plurality of application modules after the user logs into a digital mailbox.

2. The electronic seal system accessing a digital mailbox according to claim 1, wherein the plurality of application functions comprises electronic contract management, online handling of government affairs business, personal and enterprise archive management, secure identity verification and two-factor authentication, digital signature and encrypted communication, and digital identity management.

3. The electronic seal system accessing a digital mailbox according to claim 1, wherein the digital mailbox is bound by a fixed telephone number, and the fixed telephone number is a digital application conforming to a global financial security standard.

4. The electronic seal system accessing a digital mailbox according to claim 1, wherein a space of the digital mailbox is formatted and digitized.

5. The electronic seal system accessing a digital mailbox according to claim 1, further comprises a multi-module coupled to the electronic private seal/official seal generation module, wherein the multi-module comprises:
a central control module; and a communication module, an identity authentication module, a key module, and a storage module connected to the central control module;
the communication module is configured to implement communication between the electronic seal system for accessing a digital mailbox and an external server;
the identity authentication module is configured to authenticate biometric identification data input by the user to generate authenticated biometric identification data, and to authorize the user after the authentication is passed;
the key module is configured to store the plurality of keys, and to encrypt the plurality of authenticated identity information and the plurality of authenticated enterprise information according to corresponding keys in the plurality of keys to generate a plurality of encrypted authenticated identity information and a plurality of encrypted authenticated enterprise information;
the storage module is configured to store the authenticated biometric identification data, the plurality of encrypted authenticated identity information, the plurality of encrypted authenticated enterprise information, the electronic private seal, and the electronic official seal; and
the central control module is configured to receive input and control operations of other modules, and to allow the user to invoke the electronic private seal and the electronic official seal after the user obtains authorization.

6. A method for accessing a digital mailbox, applied to an electronic seal system, comprising the following steps:
providing the electronic seal system, wherein the electronic seal system comprises a first acquisition module, a second acquisition module, an information authentication module, an electronic private seal/official seal generation module, a plurality of application modules, and a digital mailbox linking module;
utilizing the first acquisition module to acquire a plurality of identity information and a plurality of enterprise information of a user; utilizing the second acquisition module to acquire a plurality of CA certificates and a corresponding plurality of keys provided by a plurality of certificate authorities;
utilizing the information authentication module to perform physical or digital authentication on the plurality of identity information and the plurality of enterprise information of the user according to the plurality of CA certificates, and generate a plurality of authenticated identity information and a plurality of authenticated enterprise information;
utilizing the electronic private seal/official seal generation module to generate an electronic private seal and an electronic official seal of the user according to the plurality of authenticated identity information and the plurality of authenticated enterprise information of the user;
utilizing the plurality of application modules to enable a plurality of application functions; and
utilizing the digital mailbox linking module to link the electronic private seal/official seal generation module and the plurality of application modules after the user logs into a digital mailbox.

7. The method for accessing a digital mailbox according to claim 6, wherein the plurality of application functions comprises electronic contract management, online handling of government affairs business, personal and enterprise archive management, secure identity verification and two-factor authentication, digital signature and encrypted communication, and digital identity management.

8. The method for accessing a digital mailbox according to claim 6, wherein the digital mailbox is bound by a fixed telephone number, and the fixed telephone number is a digital application conforming to a global financial security standard.

9. The method for accessing a digital mailbox according to claim 6, wherein a space of the digital mailbox is formatted and digitized.

10. The method for accessing a digital mailbox according to claim 6, further comprising:
providing a central control module, and a communication module, an identity authentication module, a key module, and a storage module connected to the central control module;
utilizing the communication module to implement communication between the electronic seal system accessing a digital mailbox and an external server;
utilizing the identity authentication module to authenticate biometric identification data input by the user to generate authenticated biometric identification data, and authorize the user after the authentication is passed;
utilizing the key module to store the plurality of keys, and encrypt the plurality of authenticated identity information and the plurality of authenticated enterprise information according to corresponding keys in the plurality of keys to generate a plurality of encrypted authenticated identity information and a plurality of encrypted authenticated enterprise information;
utilizing the storage module to store the authenticated biometric identification data, the plurality of encrypted authenticated identity information, the plurality of encrypted authenticated enterprise information, the electronic private seal, and the electronic official seal; and
utilizing the central control module to receive input and control operations of other modules, and allow the user to invoke the electronic private seal and the electronic official seal after the user obtains authorization.
